# EUROPÄISCHE PATENTSCHRIFT

(11) **EP 3 667 005 B1**
(45) Veröffentlichungstag und Bekanntmachung des Hinweises auf die Patenterteilung: **07.06.2023**
(21) Anmeldenummer: 19213707.3
(22) Anmeldetag: 05.12.2019
(51) Int. Cl.: E05D 5/02, E05D 7/04

(54) **SCHARNIERSYSTEM, FAHRZEUGAUFBAU, FAHRZEUG UND VERFAHREN ZUR MONTAGE EINER TÜRE**
HINGE SYSTEM, VEHICLE STRUCTURE, VEHICLE AND METHOD FOR MOUNTING A DOOR
SYSTÈME DE CHARNIÈRE, CARROSSERIE DE VÉHICULE, VÉHICULE ET PROCÉDÉ DE MONTAGE D'UNE PORTE

(30) Priorität: 14.12.2018 DE 102018132206
(43) Veröffentlichungstag der Anmeldung: 17.06.2020
(73) Patentinhaber: Kögel Trailer GmbH, 89349 Burtenbach (DE)
(72) Erfinder: PRÖBSTLE, Roman, 89359 Kötz (DE); RULEWSKI, Marcel, 86637 Zusamaltheim (DE); GRINBOLD, Matthias, 74541 Vellberg (DE); BIRLE, Günter, 86877 Walkertshofen (DE)
(74) Vertreter: Meissner Bolte Partnerschaft mbB

(56) Entgegenhaltungen:
- EP-A1- 0 022 166
- EP-A2- 0 110 824
- EP-A2- 1 705 324
- DE-A1-102012 019 295
- DE-U1- 20 221 378
- GB-A- 2 478 754

## Beschreibung

Die Erfindung betrifft einen Fahrzeugaufbau, ein Fahrzeug und ein Verfahren zur Montage einer Türe. Ein Fahrzeugaufbau gemäß dem Oberbegriff des Patentanspruchs 1 ist bspw. aus der EP 0 022 166 A1 bekannt.

Nutzfahrzeugaufbauten weisen im Wesentlichen einen Ladeboden, zwei Seitenwände, eine Decke sowie eine Vorderwand und ein Heckportal zur Be- und Entladung des Fahrzeugaufbaus auf. Am Heckportal sind ein oder mehrere Türen zum Öffnen und Schließen des Laderaums vorgesehen. Die Türe kann beispielsweise als Flügeltüre oder Klapptüre ausgeführt sein, die seitlich verschwenkbar oder horizontal klappbar ist. Um eine Schwenkbewegung bzw. eine Klappbewegung zu ermöglichen, ist die Türe oder sind die einzelnen Türblätter der Türe über Türscharniere mit der Seitenwand bzw. der Decke verbunden.

Aus der DE 10 2016 000 910 A1 ist beispielsweise ein Nutzfahrzeugaufbau mit zwei Türen bekannt, die durch mehrere Türscharniere mit einem Heckrahmen schwenkbar verbunden sind. Die Türscharniere weisen jeweils zwei Reihen mit drei Bohrungen auf, um die zugehörige Türe mittels Schraubenverbindungen mit dem Türscharnier fest zu verbinden. Dabei ist jeder Bohrung des Türscharniers eine Gewindebohrung einer Metalleinlage der Tür zugeordnet, in die eine Schraube zur festen Verbindung der Tür eingeschraubt wird.

Insbesondere bei Kühlfahrzeugen mit einem wärmeisolierten Fahrzeugaufbau, der Seitenwände und/oder Türen aus Isolierpaneelen mit einer geschäumten Kernschicht aufweist, ist es üblich, zur Befestigung von Türscharnieren Gewindeeinlagen in die Kernschicht einzuschäumen oder einzupressen. Dies ist notwendig, da eine Schraubenverbindung (kraftaufnehmende Verbindung) durch ein Einschrauben einer Schraube in die geschäumte Kernschicht nicht hält. Durch die Gewindeeinlagen kann die jeweilige Tür mit den Türscharnieren mittels Schrauben fest verbunden werden. Dies hat den Vorteil, dass auftretende Kräfte in das Isolierpaneel verbessert eingeleitet sowie aus diesem abgeleitet werden. Herkömmlicherweise werden die Gewindeeinlagen in das Isolierpaneel positionsfest eingebracht, wodurch eine nachträgliche Positionsanpassung nicht möglich ist.

Die vorstehend genannten Befestigungen der Türen an den Türscharnieren haben den Nachteil, dass die Positionen der Gewindebohrungen der Türe oder der Gewindebohrungen in der Gewindeeinlage in der Türe positionsfest vorgesehen sind. Dies kann bei der Montage hinsichtlich der Passgenauigkeit der Türe an der Laderaumöffnung bzw. dem Heckportal zu Problemen führen, da aufgrund von Fertigungstoleranzen oftmals ein Versatz zwischen den Gewindebohrungen der Türe und den Durchgangsbohrungen im Türscharnier auftreten kann. Die Schraubenverbindung ist in diesem Fall nicht herstellbar. Hierbei ist nachteilig ein hoher Anpassungsaufwand der Türe und/oder des Türscharniers erforderlich. Erfahrungswerte zeigen, dass dieses Problem auch häufig bei der Montage von Ersatztüren auftritt.

Aus der eingangs genannten EP 0 022 166 A1 ist ein Scharnier bekannt, das eine Tür mit einer Wand eines Wohnmobiles schwenkbar verbindet. Das Scharnier umfasst ein Scharnierelement und ein stirnseitiges Profil mit einem Kanal. In dem Kanal ist ein Befestigungsblock verschiebbar angeordnet. Der Kanal weist zum Scharnierelement 14 hin zwei Rippen auf, die in gegenüber angeordnete Rillen des Scharnierelements 14 eingreifen. Das Scharnierelement wird durch Schrauben, die in den Befestigungsblock eingreifen, an den Kanal gepresst, um die Tür an einer gewünschten Höhenposition zu fixieren.

DE 202 21 378 U1 beschreibt ein Scharnier für Türen, Fenster und dergleichen, das ein Strangpressprofil mit einer Profilnut und zwei darin verschiebbar angeordneten Klemmteilen aufweist. Die Klemmteile bilden ein Fixierteil zur Befestigung eines Scharnierelements. Das Fixierteil greift in einen Anlagebereich des Scharnierelements beim Verspannen ein.

Bei den Scharnieren gemäß EP 0 022 166 A1 und DE 202 21 378 U1 ist nachteilig, dass das jeweilige Profil zur Befestigung und Führung des Scharnierelements auf die Stirnseite der Tür bzw. der Wand aufgesetzt ist. Das jeweilige Profil stellt eine ungeschützte Störkante dar. Des Weiteren ist die Verbindungsstelle des aufgesetzten Profils mit der Tür bzw. der Wand keinen erhöhten Belastungen, bspw. durch schwere Türen, aussetzbar.

Der Erfindung liegt daher die Aufgabe zu Grunde, einen Fahrzeugaufbau mit einem Scharniersystem anzugeben, das einerseits die Montage von Türen an Ladeöffnungen eines Fahrzeugaufbaus erleichtert und andererseits eine erhöhte Stabilität sowie erhöhte Lebensdauer aufweist. Ferner liegt der Erfindung die Aufgabe zu Grunde, ein Fahrzeug und ein Verfahren zur Montage einer Türe anzugeben.

Erfindungsgemäß wird diese Aufgabe im Hinblick auf den Fahrzeugaufbau durch den Gegenstand des Anspruchs 1 gelöst. Mit Blick auf das Fahrzeug und das Montageverfahren wird die vorstehend genannte Aufgabe jeweils durch den Gegenstand des Anspruchs 8 (Fahrzeug) und des Anspruchs 9 (Verfahren) gelöst.

Die Erfindung beruht auf dem Gedanken einen Fahrzeugaufbau, insbesondere einen Kühlfahrzeugaufbau, mit wenigstens einer Seitenwand, wenigstens einer Türe und wenigstens einem Scharniersystem anzugeben, wobei das Scharniersystem mit der Seitenwand und/oder der Türe zum Öffnen und Schließen eines Laderaums verbunden ist. Das Scharniersystem umfasst wenigstens ein Scharnierelement zum Öffnen und Schließen einer Türe. Das Scharnierelement weist wenigstens eine Justiereinrichtung mit wenigstens einem Einlageteil und wenigstens einem Fixierteil auf, das in das Einlageteil eingreift. Zum Positionieren der Türe ist das Fixierteil gegenüber dem Einlageteil verschiebbar vorgesehen. Zusätzlich dazu ist das Fixierteil zum Fixieren der Türe am Scharnierelement gegen das Einlageteil verspannbar. Das Einlageteil ist einem Anlagebereich des Scharnierelements gegenüber angeordnet, wobei das Einlageteil wenigstens eine Führungsausnehmung aufweist, die länglich ausgebildet ist und in der das Fixierteil bei der Montage zur Führung der Türe verschiebbar angeordnet ist.

Erfindungsgemäß weist der Anlagebereich des Scharnierelements eine Ausnehmung auf, in die das Fixierteil beim Verspannen eingreift, wobei wenigstens eine Außenschicht der Türe oder der Seitenwand zwischen dem Einlageteil und dem Anlagebereich vorgesehen ist und das Einlageteil von der Außenschicht zumindest teilweise bedeckt ist derart, dass die Führungsausnehmung nach außen hin offen vorgesehen ist, wobei das Einlageteil in die Türe oder die Seitenwand eingebettet ist.

Die Erfindung hat verschiedene Vorteile. Durch die Justiereinrichtung des Scharnierelements ist die Türe vorteilhaft in ihrer Endposition anpassbar. Durch das Scharniersystem ist die Türe bspw. an einer Seitenwand eines Fahrzeugaufbaus schwenkbar gelagert. Bei einer Montage an den Fahrzeugaufbau wird die Türe mit dem Scharnierelement verbunden. Dabei greift das Fixierteil in das Einlageteil ein, wodurch die Türe vorteilhaft zum Positionieren verschoben bzw. verstellt werden kann. Das Fixierteil ist dazu gegenüber dem Einlageteil verschiebbar. Die Türe befindet sich in diesem Fall in einem vormontierten Zustand. Zum Fixieren der Türe an einer erforderlichen Endposition ist das Fixierteil gegen das Einlageteil verspannbar. Dies entspricht dem Endmontagezustand der Türe.

Die Türe kann somit vorteilhaft an der gewünschten Endposition fixiert werden.

Die Türe ist vorteilhaft an die vorgegebene Position am Fahrzeugaufbau verbessert anpassbar. Das Fixierteil kann dazu gegen das Einlageteil gepresst werden, wodurch die Türe festgestellt bzw. festgeklemmt wird. Konkret ist die Position der Türe durch die Justiereinrichtung vorteilhaft in Bezug auf ein oder mehrere Referenzflächen bzw. -punkte des Fahrzeugaufbaus anpassbar. Durch die Justiereinrichtung des Scharnierelements ist die Montage der Türe an einer Ladeöffnung des Fahrzeugaufbaus schnell und einfach durchführbar. Die Montage der Türe wird durch die Justiereinrichtung somit erheblich erleichtert.

Die Erfindung hat den weiteren Vorteil, dass durch das Einlageteil die Festigkeit der Verbindung zwischen der Türe bzw. der Seitenwand und dem Scharnierelement erhöht wird. Ferner sind durch das Einlageteil auftretende Kräfte verbessert in die Türe bzw. Seitenwand einleitbar bzw. aus dieser ableitbar.

Es ist denkbar, dass eine Positionsanpassung der Türe durch ein Verschieben des Fixierteils an der Seitenwand des Fahrzeugaufbaus und/oder an der Türe erfolgt. Das Scharnierelement kann auch wenigstens zwei Justiereinrichtungen, wie vorstehend beschrieben, aufweisen.

Das erfindungsgemäße Scharniersystem kann auch zwei Scharnierelemente der vorstehend genannten Art umfassen, die bspw. gelenkig miteinander verbunden sind. Bei dieser Variante ist ein erstes Scharnierelement an der Seitenwand und ein zweites Scharnierelement an der Türe angeordnet. Es ist auch denkbar, dass das Scharniersystem in einer weiteren Variante ein Scharnierelement der vorstehend genannten Art und ein weiteres Scharnierelement, bspw. eine Drehstange oder dergleichen, aufweist, wobei das weitere Scharnierelement an der Seitenwand und das Scharnierelement mit der Justiereinrichtung an der Tür vorgesehen ist. Auch die Anordnung der Scharnierelemente in umgekehrter Reihenfolge ist hierbei möglich.

Bevorzugte Ausführungsformen der Erfindung sind in den Unteransprüchen angegeben.

Das Einlageteil kann im Wesentlichen einen Frontbereich aufweisen, der dem Scharnierelement zugewandt ist. Des Weiteren kann das Einlageteil einen Ausformungsbereich aufweisen, in dem die Führungsausnehmung ausgebildet ist. Der Ausformungsbereich kann sich in entgegengesetzter Richtung zum Frontbereich erstrecken. Die Führungsausnehmung ist nach außen hin offen ausgebildet. Konkret ist die Führungsausnehmung durch den Frontbereich hindurch nach außen offen ausgebildet.

Die Führungsausnehmung kann durch eine Führungsnut gebildet sein, in die das Fixierteil eingreift. Das Fixierteil kann durch einen Nutenstein gebildet sein. Die Führungsausnehmung kann das Einlageteil in Längsrichtung vollständig durchdringend vorgesehen sein. Die Führungsausnehmung kann auch im Einlageteil in Längsrichtung begrenzt ausgebildet sein. Durch die Führungsausnehmung wird das Einlageteil vorteilhaft beim Positionieren der Türe geführt. Dabei wird das Einlageteil in Längsrichtung der Führungsausnehmung verschoben. Es ist auch denkbar, dass das Fixierteil beim Positionieren der Türe geführt wird. Bei dieser Variante wird das Fixierteil in Längsrichtung der Führungsausnehmung verschoben. Die Türe ist somit vorteilhaft schnell und präzise an der vorgegebenen Endposition positionierbar. Eine Montage der Türe wird dadurch erheblich erleichtert.

Bei einer weiteren besonders bevorzugten Ausführungsform ist die Führungsausnehmung zur Verstellung der Türe in Vertikalrichtung senkrecht ausgebildet und/oder die Führungsausnehmung zur Verstellung der Türe in Horizontalrichtung waagrecht ausgebildet. Dies hat den Vorteil, dass die Türe präzise und schnell an ihrer entsprechenden Endposition an dem Fahrzeugaufbau montiert werden kann. Insbesondere die Kombination aus waagrechter und senkrechter Ausbildung der Führungsausnehmung ermöglicht vorteilhaft eine flexible Einstellung bzw. Anpassung der Türposition an einer Ladeöffnung am Heck und/oder an einer Ladeöffnung einer Seitenwand des Fahrzeugaufbaus.

Im endmontierten Zustand der Türe liegt das Scharnierelement mit dem Anlagebereich auf der Außenschicht der Türe bzw. der Seitenwand an. Das Fixierteil ist in diesem Zustand mit dem Einlageteil verspannt und klemmt die Außenschicht zwischen dem Anlagebereich des Scharnierelements und dem Frontbereich des Einlageteils fest ein. Dadurch entsteht vorteilhaft eine stabile Klemmverbindung, durch die die Türe bzw. die Seitenwand fest mit dem Scharnierelement verbunden ist.

Vorzugsweise ist das Einlageteil mit der Türe oder der Seitenwand fest verbunden ist. Mit anderen Worten kann die Positionsanpassung der Türe einerseits an der Seitenwand oder anderseits direkt an der Türe erfolgen. Hierbei ist vorteilhaft, dass die Türe durch das Verspannen bzw. Verklemmen des Fixierteils mit dem Einlageteil an der gewünschten Position positionsfest gehalten wird. Erfindungsgemäß ist das Einlageteil in die Türe oder die Seitenwand eingebettet.

Bei Fahrzeugaufbauten mit nicht-isolierten Seitenwänden bzw. nicht-isolierten Türen kann das Einlageteil bspw. mit einem Paneel der Seitenwand bzw. der Türe durch Verschrauben, Nieten, Schweißen oder Kleben fest verbunden sein. Das Paneel kann dazu eine metallische Außenschicht aufweisen.

Bei Fahrzeugaufbauten, insbesondere Kühlfahrzeugaufbauten, mit Seitenwänden und/oder einer Türe aus wenigstens einem Isolierpaneel, das eine aufgeschäumte Kernschicht und wenigstens eine Außenschicht aufweist, kann das Einlageteil zur festen Verbindung in die Kernschicht eingeschäumt oder in die Kernschicht eingepresst sein. Die Außenschicht ist hierbei durch ein faserverstärktes Kunststoffmaterial gebildet. Zusätzlich kann das Einlageteil durch die Außenschicht ummantelt bzw. überzogen sein. Erfindungsgemäß ist das Einlageteil von der Außenschicht zumindest teilweise bedeckt derart, dass die Führungsausnehmung nach außen hin offen vorgesehen ist. Durch die Überdeckung der Außenschicht wird vorteilhaft eine Verbindung des Einlageteils mit der Tür bzw. der Seitenwand weiter verstärkt.

Bei einer bevorzugten Ausführungsform ist das Fixierteil in Längsrichtung der Führungsausnehmung und in Tiefenrichtung der Führungsausnehmung, insbesondere in die Führungsausnehmung hinein, bewegbar. Um die Türposition anpassen zu können, ist es erforderlich, dass das Fixierteil vom Einlageteil gelöst ist. Dazu ist das Fixierteil in die Führungsausnehmung hinein, insbesondere in Querschnittsrichtung, bewegbar. Erst im gelösten Zustand des Fixierteils ist die Türe in Längsrichtung der Führungsausnehmung verschiebbar. Hierbei ist vorteilhaft, dass die Führungsausnehmung ein Lösen des Fixierteils zulässt und beim Verschieben das Fixierteil führt.

Bei einer weiteren bevorzugten Ausführungsform weisen das Fixierteil und die Führungsausnehmung jeweils einen T-förmigen Querschnitt aufweisen, wobei die T-förmigen Querschnitte im Wesentlichen komplementär zueinander ausgebildet sind. Dies hat den Vorteil, dass das Fixierteil und das Einlageteil jeweils an den T-Flanken gegeneinander flächig anpressbar sind. Dadurch wird vorteilhaft eine Klemmverbindung zwischen dem Fixierteil und dem Einlageteil verstärkt und somit ein unzulässiges bzw. nachträgliches Verrutschen der Türe verhindert.

Das Fixierteil kann auch einen kreisförmigen oder trapezförmigen oder dreieckförmigen Querschnitt aufweisen. Es ist auch denkbar, dass das Fixierteil quaderförmig ausgebildet ist. Das Einlageteil kann plattenförmig ausgebildet sein. Konkret kann der Frontbereich des Einlageteils plattenförmig ausgebildet sein. Im Frontbereich ist eine Öffnung vorgesehen, die einen freien Durchgang in die Führungsausnehmung bildet. Der Frontbereich kann wenigstens einen Steg aufweisen, durch den die Öffnung seitlich begrenzt ist. Bevorzugt weist der Frontbereich wenigstens zwei Stege auf, die die Öffnung seitlich begrenzen. Die Führungsausnehmung kann ausgehend von der Öffnung quer zur Längsrichtung erweitert ausgebildet sein. Die Stege bilden auf der Führungsausnehmung zugewandten Seite eine Anlagefläche zum Anpressen des Fixierteils mit dem Einlageteil.

Bei einer weiteren bevorzugten Ausführungsform greift das Fixierteil in das Scharnierelement ein und richtet das Scharnierelement zu einer Vertikalseite der Türe und/oder zu einer Vertikalseite der Seitenwand rechtwinklig aus. Bei der Endmontage der Türe wird das Fixierteil mit dem Einlageteil durch Anpressen verspannt bzw. verklemmt. Der Anlagebereich des Scharnierelements weist dazu eine Ausnehmung auf, in die das Fixierteil beim Verspannen eingreift. Das Fixierteil weist dabei eine Form auf, die mit einer Form der Ausnehmung derart korrespondiert, dass das Scharnierelement zur Vertikalseite der Türe und/oder der Seitenwand rechtwinklig ausgerichtet wird. Es ist auch denkbar, dass das Scharnierelement durch das Fixierteil in einem von einem rechten Winkel abweichenden Winkel ausgerichtet wird. Hierbei ist vorteilhaft, dass eine nachträgliche Ausrichtung des Scharnierelements entfällt. Dadurch wird ein Zeitaufwand bei der Montage verringert und somit Kosten eingespart.

Vorzugsweise ist wenigstens ein Befestigungsmittel vorgesehen, das in das Fixierteil eingreift und das Fixierteil zum Fixieren der Türe am Scharnierelement gegen das Einlageteil zumindest abschnittsweise flächig anpresst. Zur Bewegung des Fixierteils in Tiefenrichtung in Bezug auf die Führungsausnehmung wirkt das Befestigungsmittel mit dem Fixierteil zusammen. Das Befestigungsmittel kann durch eine Schraube gebildet sein. Das Fixierteil kann eine Gewindebohrung aufweist, in die die Schraube zum Verspannen des Fixierteils und/oder zum Lösen des Fixierteils eingreift. Hierbei ist vorteilhaft, dass das Fixierteil und somit die Türe zur Einstellung der Türposition einfach und schnell fixierbar bzw. lösbar ist. Ferner entsteht durch die flächige Anpressung des Fixierteils an das Einlageteil eine besonders stabile Klemmverbindung zwischen dem Fixierteil und dem Einlageteil, wodurch die Türe vorteilhaft positionssicher an ihrer Endposition gehalten wird. Ferner werden durch die flächige Anpressung auftretende Kräfte verbessert in die Türe bzw. die Seitenwand eingeleitet oder aus diesen abgeleitet. Eine Belastung der Befestigungsmittel wird dadurch verringert, wodurch nur mehr eine geringe Anzahl an Befestigungsmitteln bzw. Fixierteilen erforderlich ist, um eine stabile Klemmverbindung herzustellen.

Ein nebengeordneter Aspekt der Erfindung betrifft ein Fahrzeug, insbesondere Kühlfahrzeug, mit wenigstens einem erfindungsgemäßen Fahrzeugaufbau. Beim Fahrzeug kann es sich beispielsweise um ein Kühlfahrzeug, insbesondere einen Sattelauflieger, der als Kühlfahrzeug (Kühlauflieger) ausgebildet ist, handeln.

Bei einem erfindungsgemäßen Verfahren zur Montage wenigstens einer Türe an einen Fahrzeugaufbau, insbesondere Kühlfahrzeugaufbau, ist ein Fahrzeugaufbau mit wenigstens einer Seitenwand, wenigstens einer Türe und wenigstens einem Scharniersystem vorgesehen, wobei das Scharniersystem mit der Seitenwand und/oder der Türe zum Öffnen und Schließen eines Laderaums verbunden wird. Das Scharniersystem umfasst wenigstens ein Scharnierelement zum Öffnen und Schließen einer Türe. Das Scharnierelement weist eine Justiereinrichtung mit wenigstens einem Einlageteil und wenigstens einem Fixierteil auf, das in das Einlageteil eingreift. Zum Positionieren der Türe wird das Fixierteil gegenüber dem Einlageteil verschoben und das Fixierteil zum Fixieren der Türe am Scharnierelement gegen das Einlageteil verspannt. Das Einlageteil weist wenigstens eine Führungsausnehmung auf, die länglich ausgebildet ist und in der das Fixierteil bei der Montage zur Führung der Türe verschiebbar angeordnet ist. Das Einlageteil ist einem Anlagebereich des Scharnierelements gegenüber angeordnet. Der Anlagebereich des Scharnierelements weist eine Ausnehmung auf, in die das Fixierteil beim Verspannen eingreift. Wenigstens eine Außenschicht der Türe oder einer Seitenwand ist zwischen dem Einlageteil und dem Anlagebereich vorgesehen. Das Einlageteil ist von der Außenschicht zumindest teilweise bedeckt derart, dass die Führungsausnehmung nach außen hin offen ist, wobei das Einlageteil in die Türe oder die Seitenwand eingebettet ist.

Zu den Vorteilen des Fahrzeugs wird auf die im Zusammenhang mit dem Fahrzeugaufbau erläuterten Vorteile verwiesen. Darüber hinaus kann das Fahrzeug alternativ oder zusätzlich einzelne oder eine Kombination mehrerer zuvor in Bezug auf den Fahrzeugaufbau genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das Scharniersystem des erfindungsgemäßen Fahrzeugaufbaus ausgestaltet sein kann.

In diesen zeigen,
- Fig. 1: eine Teilansicht einer Türe mit einem Scharniersystem eines Fahrzeugaufbaus nach einem erfindungsgemäßen Ausführungsbeispiel;
- Fig. 2: einen Querschnitt durch das Scharniersystem gemäß Fig. 1 und die Türe im fixierten Zustand;
- Fig. 3: einen Querschnitt durch das Scharniersystem gemäß Fig. 1 und eine Türe bei einem Positionierungsvorgang; und
- Fig. 4: einen Vertikalschnitt durch das Scharniersystem gemäß Fig. 1 und die Türe im fixierten Zustand.

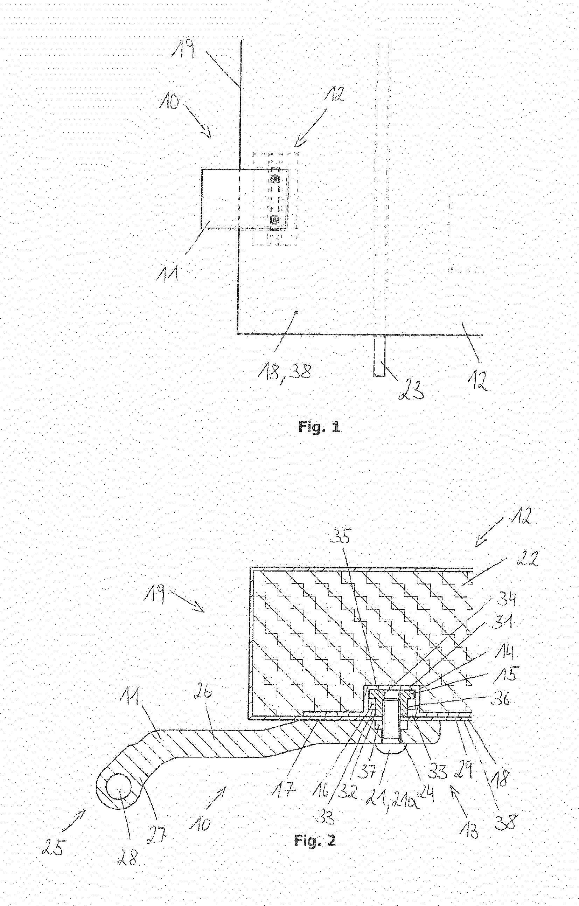

In Fig. 1 ist eine Teilansicht einer wärmeisolierten Türe 12 mit einem Scharniersystem 10 nach einem erfindungsgemäßen Ausführungsbeispiel eines Fahrzeugaufbaus gezeigt. Generell dient die Türe 12 zum Schließen und Öffnen einer Laderaumöffnung des nicht dargestellten Fahrzeugaufbaus, insbesondere eines Kühlfahrzeugaufbaus. Die Türe 12 ist durch das Scharniersystem 10 mit einer Seitenwand des Fahrzeugsaufbaus verbindbar. Im montierten Zustand ist die Türe 12 durch das Scharniersystem an der Seitenwand schwenkbar gelagert. Die Türe 12 umfasst eine Verschlusswelle 23, durch die die Türe 12 im geschlossenen Zustand verriegelbar ist.

Die Türe 12 gemäß Fig. 1 bis Fig. 4 ist durch ein Isolierpaneel gebildet, das eine aufgeschäumte Kernschicht 22 und eine Außenschicht 18 aus faserverstärktem Kunststoffmaterial aufweist. Die Türe 12 kann auch durch mehr als ein Isolierpaneel gebildet sein. Die Außenschicht 18 kann alternativ auch durch eine Metallschicht, insbesondere Metallplatten, gebildet sein. Die Kernschicht 22 ist durch die Außenschicht 18 ummantelt. Die Außenschicht 18 kann einseitig, doppelseitig bzw. auf mehreren Seiten der Kernschicht 22 ausgebildet sein. Die Außenschicht 18 kann die Kernschicht 22 vollständig ummanteln bzw. einkapseln. Gemäß Fig. 1 bis Fig. 4 umfasst das Scharniersystem 10 ein Scharnierelement 11

mit einer Justiereinrichtung 13 zum Positionieren und Fixieren der Türe 12. Auf die Justiereinrichtung 13 wird später näher eingegangen.

Das Scharnierelement 11 weist einen Anlagebereich 17 und zwei Durchgangsöffnungen 24 auf. Das Scharnierelement 11 ist im Wesentlichen blattförmig ausgebildet. Im Querschnitt bildet das Scharnierelement 11 eine Hebelform. Der Anlagebereich 17 ist durch eine Fläche gebildet, die im montierten Zustand der Türe 12 an der Außenschicht 18 flächig anliegt. Das Scharnierelement 11 ist vom Anlagebereich 17 ausgehend zu einem Drehpunkt 25 hin versetzt ausgebildet. Mit anderen Worten weist das Scharnierelement 11 zwischen dem Anlagebereich 17 und dem Drehpunkt 25 einen zum Anlagebereich 17 versetzten Zwischenbereich 26 auf. Im Bereich des Drehpunkts 25 weist das Scharnierelement 11 eine Nase 27 auf, in der eine Längsöffnung 28 ausgebildet ist. Die zentrale Achse der Längsöffnung 28 bildet dabei den Drehpunkt 25 des Scharnierelements 11 bzw. des Scharniersystems 10.

Wie in den Fig. 2 bis 4 gezeigt ist, umfasst die Justiereinrichtung 13 ein Einlageteil 14 und ein Fixierteil 15. Das Fixierteil 15 greift in das Einlageteil 14 ein, wobei zum Positionieren der Türe 12 das Fixierteil 15 gegenüber dem Einlageteil 14 verschiebbar vorgesehen ist und das Fixierteil 15 zum Fixieren der Türe 12 am Scharnierelement 11 gegen das Einlageteil 14 verspannbar ist. Auf die Positionsanpassung der Türe 12 mittels der Justiereinrichtung 13 wird später näher eingegangen.

Das Einlageteil 14 ist mit der Türe 12 fest verbunden. Konkret ist das Einlageteil 14 in der Kernschicht 22 der Türe 12 eingebettet. Das Einlageteil 14 kann zur festen Verbindung mit der Türe 12 in die Kernschicht 22 eingeschäumt und/oder eingepresst sein. Das Einlageteil 14 ist durch die Außenschicht 18 ummantelt bzw. überzogen.

Im Folgenden wird die Herstellung der Türe 12 beschrieben, um die Einbettung des Einlageteils 14 in der Kernschicht 22 zu illustrieren. Dieses Herstellungsverfahren ist bspw. auch zur Einbettung des Einlageteils 14 in eine Seitenwand des Fahrzeugaufbaus anwendbar.

Bei der Herstellung der Türe 12 wird in einem ersten Schritt die Kernschicht 22 aus einem wärmedämmenden, insbesondere geschäumten, Material bereitgestellt. Die Kernschicht 22 weist eine Ausnehmung zur Aufnahme des Einlageteils 14 auf, die eine Negativform zur Positivform des Einlageteils 14 bildet. Die Kernschicht 22 kann einteilig ausgebildet sein oder aus wenigstens zwei einzelnen Kernschichtelementen zusammengesetzt sein.

In einem zweiten Verfahrensschritt wird das Einlageteil 14 in die Ausnehmung eingelegt und/oder eingepresst. Das Einlageteil 14 kann auch bei der Bereitstellung der Kernschicht 22 bereits eingeschäumt werden. In diesem Fall kann die vorstehend genannte Ausnehmung sowie der zweite Verfahrensschritt entfallen. Anschließend erfolgt ein Besprühen der Kernschicht 22 und des Einlageteils 14 mit dem faserverstärkten, insbesondere glasfaserverstärkten, Kunststoffmaterial zur Bildung der Außenschicht 18. In einem weiteren Schritt wird die Kernschicht 22 und das Einlageteil 14 mit der Außenschicht 18 verpresst und somit fest mit der Türe 12 verbunden. Beim Verpressen wird eine ebene bzw. glatte Außenoberfläche 38 der Außenschicht 22 ausgebildet.

Bei einer alternativen Variante des Herstellungsverfahrens wird das Einlageteil 14 mit der Außenschicht 18 integral ausgebildet. Hierbei entfällt der vorstehend genannte zweite Verfahrensschritt des Einlegens bzw. Einpressens des Einlageteils 14. Das faserverstärkte Kunststoffmaterial wird direkt auf die Kernschicht 22 und die Ausnehmung zur Bildung der Außenschicht 18 sowie des Einlageteils 14 gesprüht und anschließend mit der Kernschicht 22 verpresst. Beim Verpressen wird die Ausnehmung mit dem faserverstärkten Kunststoffmaterial derart ausgefüllt, dass das Einlageteil 14 ausgebildet wird.

Gemäß Fig. 2 bis Fig. 4, weist das Einlageteil 14 einen Frontbereich 29 und einen Ausformungsbereich 31 auf. Der Frontbereich 29 ist im Wesentlichen plattenförmig ausgebildet. Der Frontbereich 29 kann eine Rechteckform, eine Dreieckform oder eine Trapezform aufweisen. Alternativ dazu kann der Frontbereich 29 auch kreisförmig ausgebildet sein. Der Ausformungsbereich 31 ist auf der dem Frontbereich 29 abgewandten Seite des Einlageteils 14 vorgesehen. Das Einlageteil 14, insbesondere der Frontbereich 29 des Einlageteils 14, ist zwischen der Kernschicht 14 und der Außenschicht 18 angeordnet. Das Einlageteil 14 kann aus Kunststoff, insbesondere faserverstärkten Kunststoff, und/oder aus Metall gebildet sein.

Das Einlageteil 14 weist eine Führungsausnehmung 16 zur Aufnahme und Führung des Fixierteils 15 auf, die im Ausformungsbereich 31 ausgebildet ist. Die Führungsausnehmung 16 ist länglich ausgebildet und erstreckt sich in Längsrichtung des Einlageteils 14. Die Führungsausnehmung 16 ist im Querschnitt T-förmig ausgebildet. Die Führungsausnehmung 16 ist durch eine Führungsnut gebildet. Die Führungsöffnung 16 durchdringt das Einlageteil 14 in Längsrichtung vollständig. Die Führungsausnehmung 16 kann auch im Einlageteil 14 in Längsrichtung, insbesondere durch wenigstens einen Anschlag, begrenzt ausgebildet sein.

Ferner ist die Führungsausnehmung 16 nach außen hin offen ausgebildet. Konkret ist die Führungsausnehmung 16 durch den Frontbereich 29 hindurch nach außen offen ausgebildet. Mit anderen Worten weist das Einlageteil 14 im Bereich der Führungsausnehmung 16 eine schlitzförmige Öffnung 32 auf. Ebenso weist die Außenschicht 18 im Bereich der schlitzförmigen Öffnung 32 eine Aussparung auf, sodass diese durch die Außenschicht 18 nicht überdeckt ist. Dadurch wird vorteilhaft ein Verschieben des Fixierteils 15 in Längsrichtung des Einlageteils 14 zur Positionsanpassung der Türe 12 ermöglicht.

Das Einlageteil 14 weist zwei Stege 33 auf, die die schlitzförmige Öffnung 32 quer zur Längsrichtung seitlich begrenzen. Die Führungsausnehmung 16 ist ausgehend von der schlitzförmigen Öffnung 32 quer zur Längsrichtung erweitert ausgebildet. Die Stege 33 bilden auf der Führungsausnehmung 16 zugewandten Seite jeweils eine Anlagefläche 34 zum Anpressen des Fixierteils 15 das Einlageteil 14.

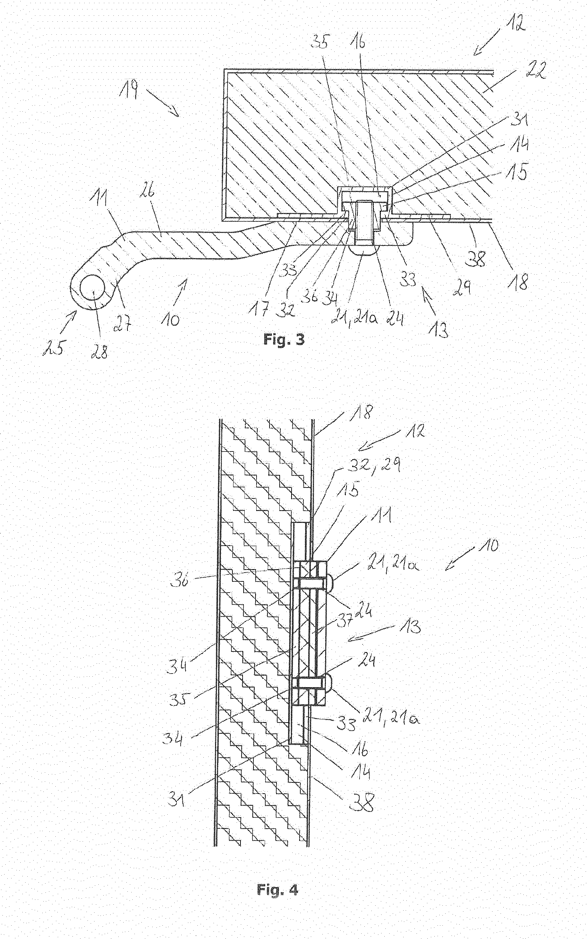

Gemäß Fig. 2 und Fig. 3 weist die Führungsausnehmung 16 im Wesentlichen eine Breite auf, die einer Breite des Fixierteils 15 entspricht. Des Weiteren ist die Führungsausnehmung 16 derart ausgebildet, dass das Fixierteil 15 in die Führungsausnehmung 16 hinein bewegbar ist. Wie in den Fig. 2 bis 4 gut erkennbar ist, ist das Fixierteil 15 in Längsrichtung und in Tiefenrichtung der Führungsausnehmung 16 verschiebbar.

Das Einlageteil 14 kann auch zwei Führungsausnehmungen 16 aufweisen. Bei dieser Variante können die Führungsausnehmungen 16 in einer Kreuzanordnung vorgesehen sein. Mit anderen Worten kann eine erste der Führungsausnehmungen 16 waagrecht und eine zweite der Führungsausnehmungen 16 senkrecht vorgesehen sein. Das Einlageteil 14 weist hierbei vorteilhaft eine Doppelfunktion auf, wobei eine Positionsanpassung der Türe 12 in Vertikalrichtung und Horizontalrichtung an ein und demselben Einlageteil 14 vorgenommen werden kann.

Das Fixierteil 15 ist im Querschnitt T-förmig ausgebildet, wobei der T-förmige Querschnitt des Einlageteils 14 im Wesentlichen zum T-förmigen Querschnitt des Fixierteils 15 komplementär ausgebildet ist. Das Fixierteil 15 kann auch einen kreisförmigen oder trapezförmigen oder dreieckförmigen Querschnitt aufweisen. Es ist auch denkbar, dass das Fixierteil 15 quaderförmig ausgebildet ist. Das Fixierteil 15 gemäß Fig. 2 bis 4 ist als ein einzelner Nutenstein ausgebildet. Es ist denkbar, dass die Justiereinrichtung 13 mehr als ein Fixierteil 15 zum Führen und Fixieren der Türe 12 aufweist. Das Fixierteil 15 kann aus Kunststoff, insbesondere faserverstärkten Kunststoff, und/oder aus Metall gebildet sein.

Das Scharniersystem 10 umfasst ferner zwei Befestigungsmittel 21 in Form von Schrauben 21a. Die Schrauben 21a erstrecken sich durch die Durchgangsöffnungen 24 des Scharnierelements 11 und greifen jeweils in eine zugehörige Gewindebohrung 34 des Fixierteils 15 ein. Um eine Positionsanpassung bzw. eine Einstellung der Türposition durchzuführen, ist es notwendig, dass das Fixierteil 15 vom Einlageteil 14 gelöst ist. Hierbei spricht man von einem Vormontagezustand, in dem eine Positionsanpassung der Türe 12 durchführbar ist. Dieser ist in Fig. 2 dargestellt.

Im Vormontagezustand der Türe 12 ist das Fixierteil 15 in der Führungsausnehmung 16 des Einlageteils 14 verschiebbar angeordnet. Zwischen dem Scharnierelement 11 und der Türe 12 ist dabei keine Klemmverbindung ausgebildet, wodurch die Türe 12 in ihrer Position anpassbar ist. Wie in Fig. 4 gut erkennbar, ist die Türe 12 im vormontierten Zustand in Vertikalrichtung entlang der Führungsausnehmung 16 verschiebbar. Der Verschiebeweg der Türe 12 ist durch die Kernschicht 22 der Türe 12 beidseitig begrenzt. Der Verschiebeweg der Türe 12 kann auch durch einen Anschlag begrenzt sein, der auf beiden Stirnseiten des Einlageteils 14 vorgesehen ist.

Zum Fixieren der Türe 12 an einer gewünschten Einbauposition an einer Ladeöffnung des Fahrzeugaufbaus ist das Fixierteil 15 durch die Schrauben 21a gegen das Einlageteil 14 anpressbar. Ist die Türe 12 an der entsprechenden Einbauposition fixiert, spricht man von einem Endmontagezustand der Türe 12. Dieser ist in Fig. 3 gezeigt. Hierbei ist das Fixierteil 15 mit einem Querschenkel 35 des Fixierteils 15 gegen die Stege 33 des Einlageteils 14 flächig angepresst. In diesem Zustand sind die Schrauben 21a angezogen, wobei der Anlagebereich 17 des Scharnierelements 11 von außen gegen die Außenschicht 18 der Türe 12 gepresst wird. Das Fixierteil 15 ist dabei mit dem Einlageteil 14 verspannt und klemmt die Außenschicht 18 zwischen dem Anlagebereich 17 des Scharnierelements 11 und dem Frontbereich 29 des Einlageteils 14 fest ein. Das Scharnierelement 11 bildet somit über die Justiereinrichtung 13 eine Klemmverbindung zwischen dem Scharnierelement 11 und der Türe 12. Die Türe 12 ist in diesem Zustand fixiert.

Ferner ist in Fig. 3 ersichtlich, dass das Fixierteil 15 im Endmontagezustand der Türe 12 mit einem Längsschenkel 36 in die Durchgangsöffnung 24 des Scharnierelements 11 eingreift bzw. eintaucht. Dazu weist die Durchgangsöffnung 24 auf der Seite des Anlagebereichs 17 eine Ausnehmung 37 in Form eines Absatzes auf, in die der Längsschenkel 36 des Fixierteils 15 eingreift. Im fixierten Zustand der Türe 12 ist zwischen einem Ende des Längsschenkels 36 und einem Boden der Ausnehmung 37 ein Abstand bzw. ein Luftspalt vorgesehen. Dadurch lässt sich vorteilhaft das Fixierteil 15 auch bei unterschiedlichen Schichtdicken der Außenschicht 18 gegen das Einlageteil 14 verspannen bzw. verklemmen.

Die Ausnehmung 37 ist derart ausgebildet, dass beim Eingreifen des Längsschenkels 36 des Fixierteils 15 das Scharnierelement 11 zu einer Vertikalseite 19 der Türe 12 rechtwinklig ausgerichtet wird. Die Querschnittsform der Ausnehmung 37 und die Querschnittsform des Längsschenkels 36 können dazu komplementär zueinander ausgebildet sein.

### Bezugszeichenliste

- 10: Scharniersystem
- 11: Scharnierelement
- 12: Tür
- 13: Justiereinrichtung
- 14: Einlageteil
- 15: Fixierteil
- 16: Führungsausnehmung
- 17: Anlagebereich
- 18: Außenschicht
- 19: Vertikalseite der Türe
- 21: Befestigungsmittel
- 21a: Schrauben
- 22: Kernschicht
- 23: Verschlusswelle
- 24: Durchgangsöffnung
- 25: Drehpunkt
- 26: Zwischenbereich
- 27: Nase
- 28: Längsöffnung
- 29: Frontbereich
- 31: Ausformungsbereich
- 32: schlitzförmige Öffnung
- 33: Stege
- 34: Gewindebohrung
- 35: Querschenkel
- 36: Längsschenkel
- 37: Ausnehmung
- 38: Außenoberfläche

## Patentansprüche

1. Fahrzeugaufbau, insbesondere Kühlfahrzeugaufbau, mit wenigstens einer Seitenwand, wenigstens einer Türe (12) und wenigstens einem Scharniersystem (10), wobei das Scharniersystem (10) mit der Seitenwand und/oder der Türe (12) zum Öffnen und Schließen eines Laderaums verbunden ist, wobei das Scharniersystem (10) wenigstens ein Scharnierelement (11) zum Öffnen und Schließen der Türe (12) umfasst, wobei das Scharnierelement (11) wenigstens eine Justiereinrichtung (13) mit wenigstens einem Einlageteil (14) und wenigstens einem Fixierteil (15) aufweist, das in das Einlageteil (14) eingreift, wobei zum Positionieren der Türe (12) das Fixierteil (15) gegenüber dem Einlageteil (14) verschiebbar vorgesehen ist und das Fixierteil (15) zum Fixieren der Türe (12) am Scharnierelement (11) gegen das Einlageteil (14) verspannbar ist, wobei das Einlageteil (14) einem Anlagebereich (17) des Scharnierelements (11) gegenüber angeordnet ist, wobei das Einlageteil (14) wenigstens eine Führungsausnehmung (16) aufweist, die länglich ausgebildet ist und in der das Fixierteil (15) bei der Montage zur Führung der Türe (12) verschiebbar angeordnet ist,
**dadurch gekennzeichnet, dass**
der Anlagebereich (17) des Scharnierelements (11) eine Ausnehmung (37) aufweist, in die das Fixierteil (15) beim Verspannen eingreift, wobei wenigstens eine Außenschicht (18) der Türe (12) oder der Seitenwand zwischen dem Einlageteil (14) und dem Anlagebereich (17) vorgesehen ist und das Einlageteil (14) von der Außenschicht (17) zumindest teilweise bedeckt ist derart, dass die Führungsausnehmung (16) nach außen hin offen vorgesehen ist, wobei das Einlageteil (14) in die Türe (12) oder die Seitenwand eingebettet ist.

2. Fahrzeugaufbau nach Anspruch 2,
**dadurch gekennzeichnet, dass**
die Führungsausnehmung (16) zur Verstellung der Türe (12) in Vertikalrichtung senkrecht ausgebildet ist und/oder die Führungsausnehmung (16) zur Verstellung der Türe (12) in Horizontalrichtung waagrecht ausgebildet ist.

3. Fahrzeugaufbau nach einem der vorhergehenden Ansprüche,
**dadurch gekennzeichnet, dass**
das Einlageteil (14) mit der Türe (12) oder der Seitenwand fest verbunden ist.

4. Fahrzeugaufbau nach einem der vorhergehenden Ansprüche,
**dadurch gekennzeichnet, dass**
das Fixierteil (15) in Längsrichtung der Führungsausnehmung (16) und in Tiefenrichtung der Führungsausnehmung (16), insbesondere in die Führungsausnehmung (16) hinein, bewegbar ist.

5. Fahrzeugaufbau nach einem der vorhergehenden Ansprüche,
**dadurch gekennzeichnet, dass**
das Fixierteil (15) und die Führungsausnehmung (16) jeweils einen T-förmigen Querschnitt aufweisen, wobei die T-förmigen Querschnitte im Wesentlichen komplementär zueinander ausgebildet sind.

6. Fahrzeugaufbau nach einem der vorhergehenden Ansprüche,
**dadurch gekennzeichnet, dass**
das Fixierteil (15) in das Scharnierelement (11) eingreift und das Scharnierelement (11) zu einer Vertikalseite (19) der Türe (12) und/oder zu einer Vertikalseite der Seitenwand rechtwinklig ausrichtet.

7. Fahrzeugaufbau nach einem der vorhergehenden Ansprüche,
**dadurch gekennzeichnet, dass**
wenigstens ein Befestigungsmittel (21) vorgesehen ist, das in das Fixierteil (15) eingreift und das Fixierteil (15) zum Fixieren der Türe (12) am Scharnierelement (11) gegen das Einlageteil (14) zumindest abschnittsweise flächig anpresst.

8. Fahrzeug, insbesondere Kühlfahrzeug, mit wenigstens einem Fahrzeugaufbau nach Anspruch 1.

9. Verfahren zur Montage wenigstens einer Türe (12) an einen Fahrzeugaufbau, insbesondere Kühlfahrzeugaufbau, bei dem ein Fahrzeugaufbau mit wenigstens einer Seitenwand, wenigstens einer Türe (12) und wenigstens einem Scharniersystem (10) vorgesehen ist, wobei das Scharniersystem (10) mit der Seitenwand und/oder der Türe (12) zum Öffnen und Schließen eines Laderaums verbunden wird, wobei das Scharniersystem (10) wenigstens ein Scharnierelement (11) zum Öffnen und Schließen einer Türe (12) umfasst, wobei das Scharnierelement (11) eine Justiereinrichtung (13) mit wenigstens einem Einlageteil (14) und wenigstens einem Fixierteil (15) aufweist, das in das Einlageteil (14) eingreift, wobei zum Positionieren der Türe (12) das Fixierteil (15) gegenüber dem Einlageteil (14) verschoben wird und das Fixierteil (15) zum Fixieren der Türe (12) am Scharnierelement (11) gegen das Einlageteil (14) verspannt wird, wobei das Einlageteil (14) wenigstens eine Führungsausnehmung (16) aufweist, die länglich ausgebildet ist und in der das Fixierteil (15) bei der Montage zur Führung der Türe (12) verschiebbar angeordnet ist, und das Einlageteil (14) einem Anlagebereich (17) des Scharnierelements (11) gegenüber angeordnet ist und der Anlagebereich (17) des Scharnierelements (11) eine Ausnehmung (37) aufweist, in die das Fixierteil (15) beim Verspannen eingreift, wobei wenigstens eine Außenschicht (18) der Türe (12) oder der Seitenwand zwischen dem Einlageteil (14) und dem Anlagebereich (17) vorgesehen ist und das Einlageteil (14) von der Außenschicht (17) zumindest teilweise bedeckt ist derart, dass die Führungsausnehmung (16) nach außen hin offen vorgesehen ist, wobei das Einlageteil (14) in die Türe (12) oder die Seitenwand eingebettet ist.

## Claims

1. A vehicle structure, in particular a cooling vehicle structure, having at least one side wall, at least one door (12) and at least one hinge system (10), wherein the hinge system (10) is connected to the side wall and/or the door (12) to open and close a cargo space, wherein the hinge system (10) comprises at least one hinge element (11) for opening and closing the door (12), wherein the hinge element (11) has at least one adjusting device (13) with at least one insert part (14) and at least one fixing part (15), which engages in the insert part (14), wherein, to position the door (12), the fixing part (15) is provided displaceably relative to the insert part (14), and the fixing part (15) can be braced against the insert part (14) in order to fix the door (12) to the hinge element (11), wherein the insert part (14) is arranged opposite a bearing region (17) of the hinge element (11), wherein the insert part (14) has at least one guide recess (16), which is elongate and in which the fixing part (15) is arranged displaceably to guide the door (12) during mounting,
**characterised in that**
the bearing region (17) of the hinge element (11) has a recess (37) into which the fixing part (15) engages during bracing, wherein at least one outer layer (18) of the door (12) or of the side wall is provided between the insert part (14) and the bearing region (17), and the insert part (14) is at least partially covered by the outer layer (17) such that the guide recess (16) is provided open towards the outside, wherein the insert part (14) is embedded in the door (12) or the side wall.

2. The vehicle structure according to Claim 2,
**characterised in that**
the guide recess (16) is vertical to adjust the door (12) in the vertical direction and/or the guide recess (16) is horizontal to adjust the door (12) in the horizontal direction.

3. The vehicle structure according to any one of the preceding claims,
**characterised in that**
the insert part (14) is fixedly connected to the door (12) or the side wall.

4. The vehicle structure according to any one of the preceding claims,
**characterised in that**
the fixing part (15) is movable in the longitudinal direction of the guide recess (16) and in the depth direction of the guide recess (16), in particular into the guide recess (16).

5. The vehicle structure according to any one of the preceding claims,
**characterised in that**
the fixing part (15) and the guide recess (16) each have a T-shaped cross-section, wherein the T-shaped cross-sections are substantially complementary to one another.

6. The vehicle structure according to any one of the preceding claims,
**characterised in that**
the fixing part (15) engages in the hinge element (11), and the hinge element (11) is oriented at right angles to a vertical side (19) of the door (12) and/or to a vertical side of the side wall.

7. The vehicle structure according to any one of the preceding claims,
**characterised in that**
at least one fastening means (21) is provided, which engages in the fixing part (15) and presses the fixing part (15) flat against the insert part (14), at least in some sections, to fix the door (12) to the hinge element (11).

8. A vehicle, in particular cooling vehicle, having at least one vehicle structure according to Claim 1.

9. A method for mounting at least one door (12) on a vehicle structure, in particular a cooling vehicle structure, in which a vehicle structure is provided with at least one side wall, at least one door (12) and at least one hinge system (10), wherein the hinge system (10) is connected to the side wall and/or the door (12) to open and close a cargo space, wherein the hinge system (10) comprises at least one hinge element (11) for opening and closing a door (12), wherein the hinge element (11) has an adjusting device (13) with at least one insert part (14) and at least one fixing part (15), which engages in the insert part (14), wherein, to position the door (12), the fixing part (15) is displaced relative to the insert part (14), and the fixing part (15) is braced against the insert part (14) in order to fix the door (12) to the hinge element (11), wherein the insert part (14) has at least one guide recess (16), which is elongate and in which the fixing part (15) is arranged displaceably to guide the door (12) during mounting, and the insert part (14) is arranged opposite a bearing region (17) of the hinge element (11), and the bearing region (17) of the hinge element (11) has a recess (37), into which the fixing part (15) engages during bracing, wherein at least one outer layer (18) of the door (12) or of the side wall is provided between the insert part (14) and the bearing region (17), and the insert part (14) is at least partially covered by the outer layer (17) such that the guide recess (16) is provided open towards the outside, wherein the insert part (14) is embedded in the door (12) or the side wall.

## Revendications

1. Carrosserie de véhicule, notamment carrosserie de véhicule frigorifique, comprenant au moins une paroi latérale, au moins une portière (12) et au moins un système de charnière (10), le système de charnière (10) étant assemblé avec la paroi latérale et / ou avec la portière (12), pour ouvrir et fermer un espace de chargement, le système de charnière (10) comprenant au moins un élément de charnière (11) pour l'ouverture et la fermeture de la portière (12), l'élément de charnière (11) comportant au moins un dispositif d'ajustage (13) pourvu d'au moins une pièce d'insertion (14) et d'au moins une pièce de fixation (15) qui s'engage dans la pièce d'insertion (14), pour positionner la portière (12), la pièce de fixation (15) étant prévue en étant déplaçable par rapport à la pièce d'insertion (14) et pour fixer la portière (12) à l'élément de charnière (11), la pièce de fixation (15) étant susceptible d'être contrainte contre la pièce d'insertion (14), la pièce d'insertion (14) étant placée au vis-à-vis d'une zone d'appui (17) de l'élément de charnière (11), la pièce d'insertion (14) comportant au moins un évidement de guidage (16), qui est conçu de forme allongée et dans lequel la pièce de fixation (15) est placée de manière déplaçable lors du montage, pour guider la portière (12),
**caractérisée en ce que**
la zone d'appui (17) de l'élément de charnière (11) comporte un évidement (37), dans lequel la pièce de fixation (15) s'engage lors de la contrainte, au moins une couche extérieure (18) de la portière (12) ou de la paroi latérale étant prévue entre la pièce d'insertion (14) et la zone d'appui (17) et la pièce d'insertion (14) étant recouverte au moins en partie par la couche extérieure (17), de telle sorte que l'évidement de guidage (16) soit prévu en étant ouvert sur l'extérieur, la pièce d'insertion (14) étant incorporée dans la portière (12) ou dans la paroi latérale.

2. Carrosserie de véhicule selon la revendication 2,
**caractérisée en ce que**
pour ajuster la portière (12) dans la direction verticale, l'évidement de guidage (16) est conçu en étant vertical et / ou pour ajuster la portière (12) dans la direction horizontale, l'évidement de guidage (16) est conçu en étant horizontal.

3. Carrosserie de véhicule selon l'une quelconque des revendications précédentes,
**caractérisée en ce que**
la pièce d'insertion (14) est fixement assemblée avec la portière (12) ou la paroi latérale.

4. Carrosserie de véhicule selon l'une quelconque des revendications précédentes,
**caractérisée en ce que**
la pièce de fixation (15) est mobile dans la direction longitudinale de l'évidement de guidage (16) et dans la direction de la profondeur de l'évidement de guidage (16), notamment à l'intérieur de l'évidement de guidage (16).

5. Carrosserie de véhicule selon l'une quelconque des revendications précédentes,
**caractérisée en ce que**
la pièce de fixation (15) et l'évidement de guidage (16) comportent chacun une section transversale en forme de T, les sections transversales en forme de T étant sensiblement complémentaires l'une par rapport à l'autre.

6. Carrosserie de véhicule selon l'une quelconque des revendications précédentes,
**caractérisée en ce que**
la pièce de fixation (15) s'engage dans l'élément de charnière (11) et l'élément de charnière (11) est orienté à angle droit par rapport à une face verticale (19) de la portière (12) et / ou par rapport à une face verticale de la paroi latérale.

7. Carrosserie de véhicule selon l'une quelconque des revendications précédentes,
**caractérisée**
**en ce qu'**il est prévu au moins un moyen de fixation (21) qui s'engage dans la pièce de fixation (15) et qui pour fixer la portière (12) à l'élément de charnière (11), presse la pièce de fixation (15) à plat au moins par sections contre la pièce d'insertion (14).

8. Véhicule, notamment véhicule frigorifique, pourvu d'au moins une carrosserie de véhicule selon la revendication 1.

9. Procédé, destiné au montage d'au moins une portière (12) sur une carrosserie de véhicule, notamment une carrosserie de véhicule frigorifique, pour lequel une carrosserie de véhicule comprenant au moins une paroi latérale, au moins une portière (12) et au moins un système de charnière (10) est prévue, lors duquel l'on assemble le système de charnière (10) avec la paroi latérale et/ou la portière (12), pour ouvrir et fermer un espace de chargement, le système de charnière (10) comprenant au moins un élément de charnière (11) pour l'ouverture et la fermeture d'une portière (12), l'élément de charnière (11) comportant un dispositif d'ajustage (13) pourvu d'au moins une pièce d'insertion (14) et d'au moins une pièce de fixation (15) qui s'engage dans la pièce d'insertion (14), lors duquel, pour positionner la portière (12), la pièce de fixation (15) est déplacée par rapport à la pièce d'insertion (14) et pour fixer la portière (12) à l'élément de charnière (11), la pièce de fixation (15) est contrainte contre la pièce d'insertion (14), la pièce d'insertion (14) comportant au moins un évidement de guidage (16), qui est conçu de forme allongée et dans lequel la pièce de fixation (15) est placée de manière déplaçable lors du montage, pour guider la portière (12), et la pièce d'insertion (14) étant placée au vis-à-vis d'une zone d'appui (17) de l'élément de charnière (11) et la zone d'appui (17) de l'élément de charnière (11) comportant un évidement (37), dans lequel la pièce de fixation (15) s'engage lors de la contrainte, au moins une couche extérieure (18) de la portière (12) ou de la paroi latérale étant prévue entre la pièce d'insertion (14) et la zone d'appui (17) et la pièce d'insertion (14) étant recouverte au moins en partie par la couche extérieure (17), de telle sorte que l'évidement de guidage (16) soit prévu en étant ouvert sur l'extérieur, la pièce d'insertion (14) étant incorporée dans la portière (12) ou dans la paroi latérale.
